# EUROPEAN PATENT APPLICATION

(11) **EP 4 023 365 A1**
(43) Date of publication of application: **06.07.2022**
(21) Application number: 20210247.1
(22) Date of filing: 05.01.2021
(51) Int. Cl.: B22F 5/04, B22F 10/20, B22F 10/40, B22F 12/00, B29C 64/153, B29C 64/40, B33Y 10/00

(54) **SUPPORT STRATEGY FOR THIN-WALLED ADDITIVE STRUCTURE**

(71) Applicant: Siemens Energy Global GmbH & Co. KG, 81739 München (DE)
(72) Inventor: HEITMANN, Timo, 10245 Berlin (DE); BOGNER, Jan Pascal, 13357 Berlin (DE); SUBRAMANIAN, Ramesh, 32765 Oviedo (US)

(57) **Abstract**

A Method of additive manufacturing a thin-walled structure (11) out of a powder bed (6) by selective irradiation is described. The method comprises additively establishing a non-continuous support (12) for supporting the thin-walled structure (11) on a build plate (1), wherein non-continuous melt pools are generated in the powder bed, and additively establishing the thin-walled structure (11) on the support (12). Moreover, a component manufactured according to said method is described.

## Description

The present invention relates to a method of additive manufacturing a thin-walled structure or component out of a powder bed by selective irradiation, such as by selective laser melting or electron beam melting, wherein a non-continuous support structure is used. Moreover, a component manufactured according to the mentioned method is described.

Preferably, the component denotes a component of a turbo machine, e.g. applied in the flow path hardware of a gas turbine, like a sealing or liner component. The component is, thus, preferably made of a nickel-or cobalt-based superalloy, particularly a precipitation hardened alloy.

In the alternative, the component may pertain to a high-performance component, such as a component applied in power generation, aerospace or the automotive sector.

Additive manufacturing techniques comprise e.g. powder-bed-fusion methods, such as selective laser melting (SLM) or laser powder bed fusion (LPBF), selective laser sintering (SLS) and electron beam melting (EBM).

A method of selective laser melting is described in EP 2 601 006 B1, for example. Moreover, additively manufactured honeycomb sealings are described in the conference article "Additive manufacturing of honeycomb seal strips; ASME, 2018, Turbo Expo Turbomachinery Technical Conference Exposition TURBOEXPO 18 June 11-15, 2018, Oslo, Norway".

Additive manufacturing, particularly powder-bed methods have proven to be useful and advantageous in the fabrication of prototypes or complex components, such as components with a mazelike or convoluted structure or functionally cooled components. Further, the additive manufacture stands out for its short chain of process steps which in turn enables material economization and a particularly low lead time.

Further additive manufacturing approaches relate to "Directed Energy Deposition (DED)", such as laser cladding, electron beam or plasma welding, metal inkjet molding (MIM), so-called sheet lamination methods, or thermal spraying (VPS, LPPS) methods, cold spraying (GDCS).

Apparatuses or setups for such methods usually comprise a manufacturing plate or build platform on which the component is built layer-by-layer after the feeding of a layer of base material which may then be melted, e.g. by an energy beam, such as a laser or electron beam, and subsequently solidified. The layer thickness is determined by a recoater that moves, e.g. automatically, over the powder bed and removes excess material from a manufacturing plane or build space. Typical layer thicknesses amount to between 20 µm and 40 µm. During the manufacture, said energy beam scans over the surface and melts the powder on selected areas which may be predetermined by a CAD-file according to the geometry of the component to be manufactured. Said scanning or irradiation is preferably carried out in a computer implemented way or via computer aided means, such as computer aided manufacturing (CAM) instructions, which may be present in the form of a dataset. Said dataset or CAM file may be or refer to a computer program or computer program product.

Particularly the manufacturing of thin-walled structures with LPBF in a great design freedom is one of the promising possibilities of additive manufacturing. Problems, however, occur, when overhanging portions need to be established and an overhang angle exceeds a certain limit so that support structures are needed. Since particularly thin or thin-walled structures are fragile, removal of the support with conventional methods and tools is quite difficult.

Thin walled structures require very careful removal or separation, such as with tools like wire-EDM. But even such tools are limited to good accessibility of the respective structure in the design of the component.

It is an object of the present invention to provide means with which the additive buildup of particularly thin-walled structures is facilitated. Simultaneously, the present invention eases the subsequent removal of thin structures without damage. Consequently, the presented solution significantly enhances the design freedom in powder bed fusion manufacturing approaches and decreases the size limit of structures being oriented vertically or with significant overhangs.

The mentioned object is achieved by the subject-matters of the independent claims. Advantageous embodiments are subject-matter of the dependent claims.

An aspect of the present invention relates to a method of additive manufacturing a (supported) thin-walled structure or component, such as a lattice or honeycomb structure, out of a powder bed by selective irradiation, i.e. selective laser melting, selective laser sintering or electron beam melting.

The method further comprises additively establishing a non-continuous support or support structure for supporting the thin-walled structure on a build plate or platform, wherein non-continuous melt pools are generated in the powder bed.

The term "supporting" shall in this context denote a mechanical support as well as, preferably, a thermal support structure acting as a heat sink in order to let excess heat dissipate from a build space of the corresponding manufacturing device.

The method further comprises additively establishing the thin-walled structure on the support.

The term "thin-walled" shall mean that the respective structure has a small extension in at least one spatial direction, like a wall structure. It may, however, as well denote a point-like structure. The "thin-wall" may particularly relate to a structure generated by a single scanning path. The structure may, thus, have a thickness of down to between 80 µm and 200 µm.

Particularly, the non-continuous support structure on the one hand enables the additive buildup of the thin-walled structure. In addition, the removal of the established structure from the build plate - or as the case may be the support - may significantly eased. This is because of the proportionate structural interruption (non-continuity) of the support.

In an embodiment the support is formed in a pulsed irradiation mode in order to generate the non-continuous melt pools. An energy beam, such as a laser beam, for the irradiation may e.g. be pulsed at a frequency from 1 to 10 kHz, particularly around 2 kHz. Such frequencies allow to leave an irradiated and liquefied structure enough time to solidify and therewith provide for beneficial structural properties of the support. In general, the use of a pulse wave irradiation mode is an expedient way to tailor the temporal and/or spatial energy input.

In an embodiment the support is formed in that a reduced energy input, such as by a continuous wave mode, energy beam, like a laser or electron beam, is applied in order to generate the non-continuous melt pools. The energy input can here as well expediently be tailored via a laser or beam power, or laser power density.

In an embodiment a structural overlap is formed between the thin-walled structure and the support in a build direction. This may practically be embodied via a "double" or superposed irradiation of a given layer, wherein the beam parameters for the solidification of the thin-walled structure and those for the solidification of the support are applied simultaneously or consecutively. The result is an improved structural connection between the support and the thin-walled structure. Particularly, said connection is that rigid that distortion of the thin-walled structure during or after the buildup process may reliably be prevented.

In an embodiment a related overlapping distance amounts to between two and four times of a layer thickness during the manufacturing process, such as three times the layer thickness. In turn, the layer thickness usually amounts to between 30 µm and 100 µm for any given layer, particularly between 40 µm and 80 µm.

In an embodiment a vertical extension (usually along the build direction) of the support between the build platform and the structure amounts to between five and seven times of the layer thickness during the manufacturing process, such as around six times the layer thickness. This embodiment advantageously provides for sufficient space and accessibility for a subsequent separation process of the structure from the support, such as by electrical discharge machining. On the other hand, a reliable structural connection between the established structure and the build plate is provided.

In an embodiment the non-continuous support is formed of thin teeth, thereby effecting as a predetermined breaking point during a subsequent separation of the thin-walled structure or component from the support and/or the build platform.

In an embodiment the thin-walled structure is substantially established in single path irradiation scans. It is apparent that a component to be manufactured by the given means may comprise such thin-walled structure only in the initial phase of the manufacturing process. Hence, subsequent to the buildup of the thin wall, a more rigid or bulky (carrier) structure may be established that requires multiple scanning paths.

In an embodiment, the thin-walled structure is (substantially) established in a pulsed irradiation mode, such as a mode comparable to the one mentioned above with regard to the support structure. Thus, the mentioned buildup of the thin-walled structure may as well be carried out in a pulsed mode irradiation. Contrary to the situation for the support structure, this buildup should, however, not result in a tooth like structure, but preferably in a continuous structure.

In an embodiment, the thin-walled structure is a honeycomb structure and/or a lattice structure, such as a honeycomb sealing for an application in the hot gas path of a turbine.

In an embodiment, a further (volume) support is established in interspaces between structure or cell elements of the thin-walled structure and/or the support, wherein the further (indirect) support is free of any structural connection to the thin-walled structure. In this regard the interspaces may be formed of hexagons when viewed from a top view, i.e. on a manufacturing plane.

In an embodiment, a gap between the further support and the thin-walled structure amounts to around an extension of a related melt pool width. The melt pool width may in turn amount to slightly more than a weld seam or weld trace resulting from said melt pool when the respective structure is solidified.

In an embodiment the vertical extension of the further support roughly equals to a vertical extension of the support between the built plate and the thin-walled structure.

In an embodiment the thin-walled structure is being mechanically separated from the support, such as by mechanical means, like electrical discharge machining, like "wire-EDM".

A further aspect of the present invention relates to a component comprising the thin-walled structure manufactured or suitable to be manufactured according to the method as described.

Advantages and embodiments relating to the described method may as well pertain or be valid with regard to the component itself, or vice versa.

Further features, expediencies and advantageous embodiments become apparent from the following description of the exemplary embodiment in connection with the Figures.
Figure 1 illustrates principles of powder-bed-based additive manufacturing of a component by way of a schematic sectional image.
Figure 2 indicates in a schematic sectional image the support of a structure manufactured according to the present invention.
Figure 3 indicates a single scan path irradiation as may be present along cut A-A in Figure 2.
Figure 4 indicates a schematic (top view) of a thin-walled honeycomb structure.
Figure 5 indicates in a schematic top view a support structures in a honeycomb-like shape according to aspect of the present invention.
Figure 6 indicates in a sectional view support structures for the additive buildup of a thin honeycomb design.
Figure 7 indicates in a simplified schematic a thin-walled lattice structure.

Like elements, elements of the same kind and identically acting elements may be provided with the same reference numerals in the Figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

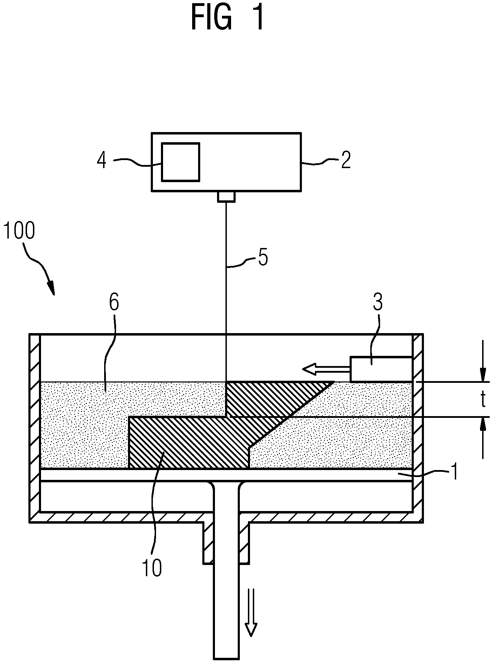

Figure 1 shows an additive manufacturing device 100. Said device 100 may be a conventional device for manufacturing any type of components by powder-bed-fusion (cf. PBF). Such techniques employ a bed of a powder or base material which is selectively and layerwise exposed to or irradiated by an energy beam 5, such as a laser or an electron beam of an irradiation apparatus or energy beam source. Accordingly, the given PBF method may relate to selective laser sintering, selective laser melting or electron beam melting.

Said processes feature that the component (cf. reference numeral 10) is established or build up on top of a build platform 1. In other words, the component 10 is fused or welded onto said platform 1 and consecutively established by selectively solidifying the base material out of single layers according to its predefined geometry which is usually provided in form of a CAD-file. After the irradiation or fusing of each layer, the build platform 1 is usually lowered according to the layer thickness t and a new base material layer is deposited on a manufacturing plane via a recoater 3.

The irradiation apparatus 20 is connected to or may be implemented via a computer program or processor, such as a build processor, as indicated by numeral 4.

The component 10 as referred to herein may particularly relate to a part or an article of complex shape, such as with filigree portions of structures. Preferably, said component is, preferably, made of a high-performance material, such as a material of great strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

The method according to the present invention is a method of additive manufacturing a thin-walled structure 11, e.g. as part of the mentioned component 10. The thin-walled structure 11 is expediently formed out of the powder bed 6 by selective irradiation, as described above.

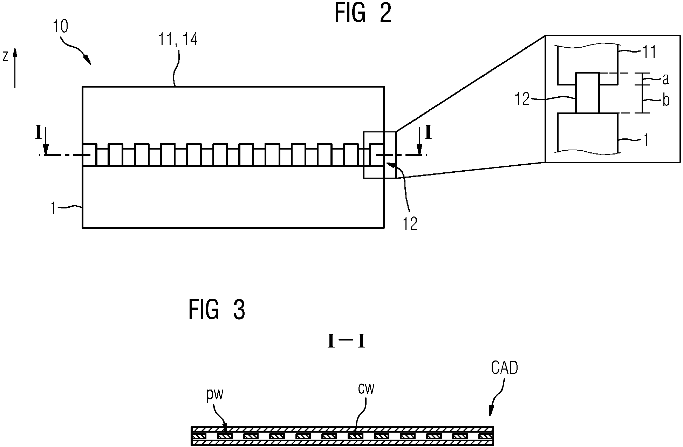

The method comprises additively establishing or building up a non-continuous support 12 on the build platform 1, as is e.g. indicated in Figure 2. The non-continuous support 12 is formed by generating non-continuous melt pools (not explicitly indicated) in the powder bed during the irradiation process. The support 12 is provided in order to mechanically and/or thermally supporting the thin-walled structure 11.

As shown in Figure 2, the non-continuous support 12 may comprise or be formed of a tooth-like structure or thin tooth elements, and thereby effecting as a predetermined breaking points during a subsequent separation of the thin-walled structure 11 from the support 11 (see below).

Moreover, the method comprises additively establishing the thin-walled structure 11 on the support 12.

The support 12 may further be established in that a pulsed irradiation mode (cf. numeral pw in Figure 3 below) is used for the irradiation of the powder bed. Said pulse wave mode may be implemented via a so-called Q-switching of an according irradiation laser or e.g. by interconnecting a frequency generator for generating beam pulsed, such as at frequencies between 1 and 10 kHz, preferably between 1 and 3 kHz, such as 1.2 kHz.

Additionally or alternatively, the support 12 (support structure) may be formed in that a reduced energy input is applied by an energy beam 5 in order to generate the non-continuous melt pools. Therefore, e.g. a beam power or beam power density may be reduced to below an extend at which the continuous melt pool is maintained. The result is likewise a non-continuous melt pool and hence a non-continuously solidified structure.

For the sake of simplicity, the component's structure 11 - as indicated on top of the support 12 along the vertical z direction - is merely indicated by a rectangular design in Figure 2, whereas any a given design shall be comprised by the presented approach, preferably even a complex and intricate structure with thin walls or thin portions.

The indication on the very right of Figure 2 shows a structural connection between the build plate 1 and the structure 11 via a single tooth of the support 12 in greater detail. It can, particularly, be seen that in the support structure overlaps over a distance a with the structure 11 in the vertical direction z.

Said overlap may amount to between two and four times of a layer thickness t (cf. above) during the manufacturing process, such as around three times of said layer thickness t. The technical effect of said overlap a is the rigid structural connection which may be formed between the established structure. Said structural connection is preferably robust enough to prevent any rupture or distortion of the structure 11 during the buildup and/or during a post-weld heat treatment. On the other hand, said connection may preferably be easily removed after the manufacturing/buildup of the thin-walled structure 11 is completed.

Between the build plate 1 and the thin-walled structure 11, the support extends over a distance b, which may in turn amount to between five and seven times of a layer thickness t during the manufacturing process, such as around six times the layer thickness t. It is apparent to a skilled person that the extension b is preferably as well chosen such that on the one hand, the ripping off the thin-walled structure 11 from the build plate 1 due to mechanical loads during the buildup is prevented. Moreover, a resiliency of the structural connection against distortion or mechanical loads may be tailored via said extension b. Still further, an accessibility of the structural joints between the thin-walled structure 11 and the base plate 1 for separation tools, such as electrical discharge machining wires or the like, is determined by said vertical extension b.

Figure 3 indicates a single scan path irradiation for establishing the thin-walled structures as taken or part of a connection along cut A-A in Figure 2. A single scanning path is usually determined by the laser spot diameter and/or the resulting melt pool width.

It is apparent by way of the dashed line that a pulsed (pw) scanning path may be used for the irradiation of the support structure 12. The continuous contours beside the dashed line may indicate the (CAD) model geometry of the respective cross-sectional geometry of the support 12.

As an alternative to the pw-irradiation, continuous wave irradiation (cw) may be used even though this is not explicitly illustrated/visible in Figure 3.

Particularly, a pulsed irradiation is predestined for establishing the thin-walled structures of portions of the component 10. Likewise, as indicated in Figure 3, a single scan path preferably allows to establish very thin structures, even below dimensions of conventional melt pool widths, like e.g. 100 µm or below.

When choosing a pulsed single scan irradiation, thickness of the resulting structure can further be lowered (see below), as the melt pool thickness is reduced, which determines the resulting wall thickness.

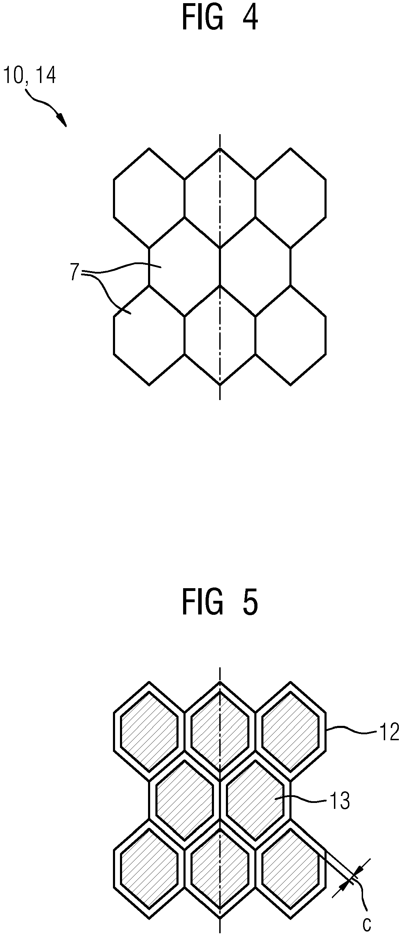

Figure 4 indicates in a top view image a honeycomb structure 14, as may be part of the component's design.

In this design, particularly hexagonal (thin-walled) elements are arranged in a regular, close-packed and/or space-filling geometry. Thereby, single honeycomb elements define interspaces 7, respectively.

In particular, such honeycomb structures are used for sealing elements applied in the hot gas path of gas turbines, such as honeycomb sealings. These are usually constructed for minimising internal leakage of a working-fluid, e.g. between stages for sealing space between rotor blade tips and stator parts using an erodible or abrasive strip. Usually such sealing elements comprise a honeycomb structure only at a distant portion which is facing towards a respective rotor component.

Figure 5 illustrates by way of the described "honeycomb" example an inventive support strategy according to the present invention. The honeycomb-like lattice in Figure 5 shall indicate an according support 12 and/or structure 11.

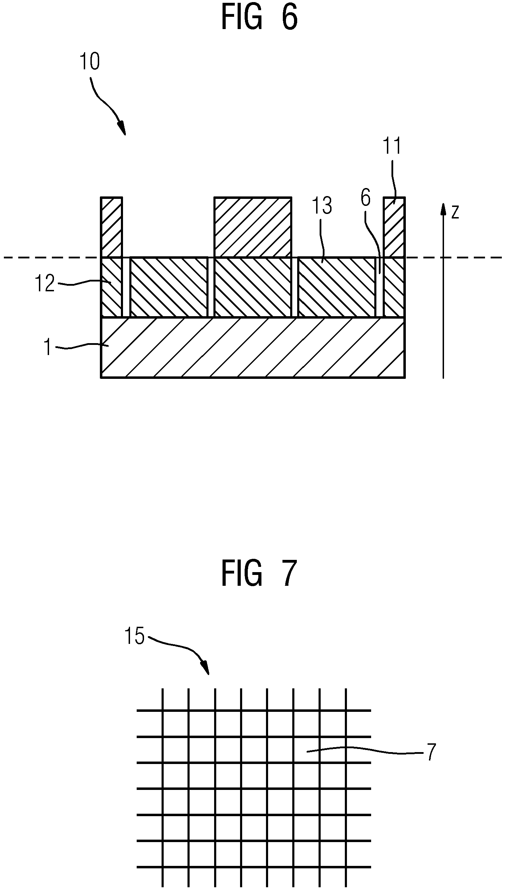

According to an embodiment of the present invention, a further support 13 is (additively) established in the interspaces 7 between structure elements of the thin-walled structure 11 and/or the support 12, wherein the further support 13 is free of any structural connection to the thin-walled structure 11. This particularly allows to ease a subsequent separation of the established structure 11 from the build plate 1. Particularly, a gap c is provided between the further support 13 and the thin-walled structure 11 which may amount to around an extension of a related melt pool width. This predetermined distance c allows to mechanically support the buildup of the non-continuous support 12 as well as the thin-walled structure 11 even though a structural connection is not formed. Instead, said vertically extending elements of the further support 13, reinforce the interspaces in order to protect the thin and fragile build-up of the (intermediate) thin walled support. This is further illustrated in the sectional view of Figure 6, wherein numeral 6 shall indicate still loose (non-solidified) powder between the further support structures 13 and the honeycombs (cf. numerals 11 and 12). The further support structures 13, having a similar shape as the support 12 or as the case may be the structure 11, effect as constraints for the thin-walls together with the loose powder in the gap regions.

It is further shown in Figure 6 that the further support structures 13 are only manufactured up to a vertical height, at which the buildup of the actual structure 11 shall be initiated. To this effect, the buildup of the volume supports 13 is stopped when the overlap of the honeycomb support 12 and the and thin-walled honeycomb is reached. Thus, a vertical extension of the further support 13 preferably equals to a vertical b extension of the support 12.

After the final buildup of thin-walled honeycomb structure 11, the same has to be separated from the build plate (indicated by the dashed line in Figure 6). This is preferably achieved via a mechanical separation, such as by wire EDM or related methods. Via an expedient choice of the above-mentioned vertical extension z, an advantageous accessibility for such separation tools may be provided.

Figure 7 indicates a further example of a thin-walled structure, the manufacture of which can be significantly facilitated by the solutions of the present invention. As a mere example, a lattice structure 15 is shown in a simplified way. The illustration of Figure 7 may relate to a top view as well as to sectional view image. Preferably, thickness of each of the lattice structure elements may as well amount to below 100 µm for example. To this effect, the same measures as the ones mentioned above, such as a single scan path irradiation and/or even a pulsed irradiation may be used.

Without loss of generality, other design, such as thin-wall pockets, ribs, struts, blades, trusses, matrices or cellular or spring element may be contemplated.

## Claims

1. Method of additive manufacturing a thin-walled structure (11) out of a powder bed (6) by selective irradiation, the method comprising:
- additively establishing a non-continuous support (12) for supporting the thin-walled structure (11) on a build plate (1), wherein non-continuous melt pools are generated in the powder bed, and
- additively establishing the thin-walled structure (11) on the support (12).

2. Method according to claim 1, wherein the support (12) is formed in a pulsed (pw) irradiation mode.

3. Method according to claim 1 or 2, wherein the support (12) is formed in that a reduced energy input is applied by an energy beam (5) in order to generate the non-continuous melt pools.

4. Method according to one of the previous claims, wherein a structural overlap (a) between the thin-walled structure (11) and the support (12) in a build direction (z) is formed.

5. Method according to claim 4, wherein an overlapping distance (a) amounts to between two and four times of a layer thickness (t) during the manufacturing process, such as around three times the layer thickness (t).

6. Method according to claim 4 or 5, wherein a vertical extension (b) of the support (12) between the build plate (1) and the structure (11) amounts to between five and seven times of a layer thickness (t) during the manufacturing process, such as around six times the layer thickness (t).

7. Method according to one of the previous claims, wherein the non-continuous support (12) is formed of thin teeth, and thereby effecting as a predetermined breaking point during a subsequent separation of the thin-walled structure (11) from the support (11).

8. Method according to one of the previous claims, wherein the thin-walled structure (11) is established in single path irradiation scans.

9. Method according to one of the previous claims, wherein the thin-walled structure (11) is established in a pulsed irradiation mode.

10. Method according to one of the previous claims, wherein the thin-walled structure (11) is a honeycomb structure, such as a honeycomb sealing for an application in the hot gas path of a gas turbine.

11. Method according to one of the previous claims, wherein a further support (13) is established in interspaces (7) between structure elements of the thin-walled structure (11) and/or the support (12), and wherein the further support (13) is free of any structural connection to the thin-walled structure (11).

12. Method according to claim 11, wherein a gap (c) between the further support (13) and the thin-walled structure (11) amounts to around an extension of a related melt pool width.

13. Method according to claim 11 or 12, wherein a vertical extension of the further support equals to a vertical (b) extension of the support (12).

14. Method according to one of the previous claims, wherein the thin-walled structure (11) is being mechanically separated from the support (12).

15. Component (11) comprising a thin-walled structure manufactured according to the method of one of the previous claims.
